# EUROPEAN PATENT APPLICATION

(11) **EP 4 797 619 A1**
(43) Date of publication of application: **26.08.2026**
(21) Application number: 25195634.8
(22) Date of filing: 13.08.2025
(51) Int. Cl.: H04L 9/40, H04L 9/32, H04W 12/08, G06F 21/57, G06F 21/62, H04W 12/06

(54) **ACCESS CONTROL METHOD AND SYSTEM FOR KEY ARRAY POOL OF TERMINAL**

(30) Priority: 19.02.2025 CN 202510181568
(71) Applicant: FUJIAN WISBO DIGITAL TECHNOLOGY Co. Ltd., Xiamen Fujian 361000 (CN)
(72) Inventor: HUANG, HUI, XIAMEN CITY, 361000 (CN)
(74) Representative: Dall'Olio, Christian

(57) **Abstract**

The present invention discloses an access control method for a key area of a terminal, including the following steps: receiving a key array pool access request sent by an application, wherein the key array pool access request at least carries a target key array pool identifier for accessing a target key array pool; acquiring a preset key array pool identifier mapping table, and determining a target grant state of the target key array pool identifier based on the key array pool identifier mapping table; and according to the target grant state, determining whether access of the application to the target key array pool is allowed. Accordingly, the present invention further discloses an access control system applied to the above-mentioned access control method in the present invention.

## Description

### Technical Field

The present invention relates to the technical field of information security, in particular to an access control method and system for a key array pool of a terminal.

### Background Art

With the rapid development of an information technology, terminal devices, such as point of sale (POS) terminals, have been widely applied to life and work of people. These terminal devices not only store a great deal of personal privacy information, but also undertake various important business processing tasks, such as mobile payment and online transaction. **In** order to ensure the security of data, a key array pool is usually set in a terminal device, and the key array pool is used for storing and managing sensitive data such as a key required by the terminal device. The key is a core element for guaranteeing the security and transaction data and the security of a system, once the key array pool is illegally accessed, an attacker can easily decrypt the transaction data and forge a transaction signature, thereby resulting in serious security incidents.

In the prior art, in order to guarantee the security of the key array pool, a way of signature verification for an application is usually used to improve the security that the application accesses the key array pool. However, this way has great limitations: although the way of signature verification can guarantee the security of the application itself, for the key array pool, it is not enough to only rely on the signature verification for the application, which is due to a fact that even if the application is legal, there may be malicious exploitation, for example, the attacker may implant malicious codes to the application to try to illegally access the key array pool, so that the security of the key array pool is lower.

### Summary of the Invention

The technical problem to be solved by the present invention is to provide an access control method and system for a key array pool of a terminal to solve the problem that the existing security of access control for a key array pool of a terminal is not high.

In order to solve the above-mentioned technical problem, the present invention adopts a technical solution: provided is an access control method for a key array pool of a terminal, including the following steps:
S1: receiving a key array pool access request sent by an application, wherein the key array pool access request at least carries a target key array pool identifier for accessing a target key array pool;
S2: acquiring a preset key array pool identifier mapping table, and determining a target grant state of the target key array pool identifier based on the key array pool identifier mapping table; and
S3: according to the target grant state, determining whether access of the application to the target key array pool is allowed; wherein if the target grant state is a granted state, the access of the application to the target key array pool is allowed, and if the target grant state is an ungranted state, the access of the application to the target key array pool is rejected.

Further, in the access control method in the present invention, in step S2, the key array pool identifier mapping table includes a token identifier of the application, a key array pool identifier corresponding to the token identifier and a grant state of the key array pool identifier.

Further, in the access control method in the present invention, in step S2, the determining a target grant state of the target key array pool identifier based on the key array pool identifier mapping table includes:
acquiring the token identifier of the application, and matching the target grant state corresponding to the target key array pool identifier in the key array pool identifier mapping table based on the token identifier.

Further, in the access control method in the present invention, the method further includes: performing a data initialization operation in the case that the terminal performs a booting operation.

Further, in the access control method in the present invention, the data initialization operation includes:
determining whether a key array pool identifier state table exists in a database of the terminal, if the key array pool identifier state table does not exist in the database of the terminal, creating the key array pool identifier state table in the database, and if the key array pool identifier state table exists in the database of the terminal, reading data in the key array pool identifier state table, and storing the data in the key array pool identifier state table into the key array pool identifier mapping table in an internal memory of the terminal.

Further, in the access control method in the present invention, the method further includes: in a process of installing the application, performing an updating operation on the key array pool identifier mapping table and the key array pool identifier state table.

Further, in the access control method in the present invention, the performing an updating operation on the key array pool identifier mapping table and the key array pool identifier state table includes:
acquiring and parsing an installation package of the application to obtain a key array pool identifier in the installation package; wherein the key array pool identifier is pre-signed in a customized signature entity;
determining whether the key array pool identifier is valid, if the key array pool identifier is valid, setting a grant state of the key array pool identifier as a granted state, and if the key array pool identifier is invalid, setting the grant state of the key array pool identifier as an ungranted state; and
associating the key array pool identifier and the grant state with the token identifier, and correspondingly storing the key array pool identifier and the grant state into the key array pool identifier mapping table and the key array pool identifier state table, respectively.

Further, in the access control method in the present invention, the determining whether the key array pool identifier is valid includes:
determining whether the key array pool identifier satisfies preset conditions, if the key array pool identifier satisfies the preset conditions, determining that the key array pool identifier is valid, and if the key array pool identifier does not satisfy the preset conditions, determining that the key array pool identifier is invalid;
wherein the preset conditions are that: the key array pool identifier comprises eight characters, and each character is a-f or A-F or 0-9.

Accordingly, the present invention further provides an access control system for a key array pool of a terminal applied to the above-mentioned access control method, wherein the terminal includes an application, a personal identification number pad (Pinpad) service module, a grant authentication service module and a target key array pool, and the Pinpad service module is in communication connection with the application and the grant authentication service module, respectively, wherein:
the application is configured to initiate a key array pool access request, and send the key array pool access request to the Pinpad service module;
the Pinpad service module is configured to receive the key array pool access request, and call, by Binder communication, an interface for verifying the target key array pool identifier in the grant authentication service module so as to transmit the target key array pool identifier into the grant authentication service module; and
the grant authentication service module is configured to perform grant state verification on the target key array pool identifier after receiving the target key array pool identifier transmitted by the Pinpad service module so as to determine, according to a verified target grant state, whether the application has an access authority to the target key array pool.

Further, the access control system in the present invention further includes a package manager, wherein the package manager is configured to parse an installation package in a process of installing the application so as to acquire a key array pool identifier with the installation package carried in a customized signature entity.

The present invention has the beneficial effects that: the present invention provides an access control method for a key array pool of a terminal. When being intended to access a target key array pool, an application will send a key array pool access request carrying a target key array pool identifier, thereby achieving security management control for access of the application to the target key array pool based on the target key array pool identifier. Specifically, when the key array pool access request is received, a target grant state of the target key array pool identifier will be determined based on a preset key array pool identifier mapping table. Then, control for the access of the application to the target key array pool is achieved according to the target grant state, when the target grant state corresponding to the application is a granted state, the access of the application to the target key array pool is allowed, and when the target grant state is an ungranted state, the access of the application to the target key array pool is rejected. In conclusion, in the present invention, stricter and securer grant management control for key array pool access is achieved based on the target key array pool identifier in the key array pool access request and the corresponding target grant state, so that secure access of the application to the target key array pool is achieved, and the data security of the key array pool is improved.

### Brief Description of the Drawings

Fig. 1 is a step flow diagram of an access control method for a key array pool of a terminal in an embodiment of the present invention; and
Fig. 2 is another step flow diagram of an access control method for a key array pool of a terminal in an embodiment of the present invention.

### Detailed Description of the Invention

In order to describe the technical contents and achieved objects and effects of the present invention in detail, following description is shown in conjunction with embodiments and cooperation with the accompanying drawings.

With the increasing application of terminals (i.e., terminal devices) such as POS terminals, there have been more and more malicious programs, and the security of the terminals cannot be ignored. For an application installed in a terminal, it usually has passed signature verification and is secure. However, for a key array pool, it is not enough to only rely on the signature verification for the application, which is due to a fact that even if the application is legal, there may be malicious exploitation, for example, an attacker may implant malicious codes to the application to try to illegally access the key array pool, so that the security of the key array pool is lower. Therefore, stricter and securer grant management control is also needed.

The key array pool stores keys required to ensure secure data transmission, including symmetric keys and asymmetric keys, and in particular, keys necessary for the payment process are stored. Therefore, permission control is required for applications accessing the key array pool.

Therefore, the present invention provides an access control system for a key array pool of a terminal. The terminal includes an application, a Pinpad service module, a grant authentication service module and a target key array pool, and the Pinpad service module is in communication connection with the application and the grant authentication service module, respectively, wherein:
the application is configured to initiate a key array pool access request, and send the key array pool access request to the Pinpad service module;
the Pinpad service module is configured to receive the key array pool access request, and call, by Binder communication, an interface for verifying the target key array pool identifier in the grant authentication service module so as to transmit the target key array pool identifier into the grant authentication service module; and
the grant authentication (i.e., AccessToken) service module is configured to perform grant state verification on the target key array pool identifier after receiving the target key array pool identifier transmitted by the Pinpad service module so as to determine, according to a verified target grant state, whether the application has an access authority to the target key array pool.

Next, the AccessToken service module returns a verified result to the Pinpad service module. **If** the target grant state is a granted state (that is, it has the access authority), the Pinpad service module allows the application to access the target key array pool; and if the target grant state is an ungranted state (that is, it does not have the access authority), the Pinpad service module will reject the key array pool access request of the application, and return wrong information to the application.

The Pinpadservice module is a service module in a scenario where information security is guaranteed and sensitive information is inputted and processed, and mainly takes charge of processing and securely inputting relevant operations. In a scenario where the application accesses the key array pool, the Pinpad service module can ensure that the inputted sensitive information (such as the target key array pool identifier) is transmitted and processed in a secure way.

The Binder communication is an inter-process communication mechanism in the system, and allows efficient and secure data exchange and method calling among different processes.

**It** can be known from the above-mentioned description that the present invention has the beneficial effects that the corresponding Pinpad service module and grant authentication service module are disposed, and management control for the key array pool access request sent by the application is performed based on the above-mentioned modules. The key array pool access request can carry a name (i.e., the target key array pool identifier) of the target key array pool intended to be accessed by the application, after the grant authentication service module receives the target key array pool identifier, grant state verification can be performed on the target key array pool identifier, and then, it is determined, according to the verified target grant state, whether the application has the access authority to the target key array pool. **If** the application has the access authority, the access of the application to the target key array pool is allowed, and if the application does not have the access authority, the access of the application to the target key array pool is rejected.

In an actual application, the process of the grant state verification of the grant authentication service module to the target key array pool identifier can be described as follows: after the grant authentication service module receives the target key array pool identifier, data in a key array pool identifier mapping table in an internal memory is queried via a token identifier (i.e., tokenId), and the token identifier has uniqueness for the application, and therefore, one or more key array pool identifiers corresponding to the application and grant states corresponding to the key array pool identifiers can be rapidly and accurately found out from the key array pool identifier mapping table according to the token identifier. Then, a target grant state of a required target key array pool identifier is found out. For example, it is assumed that the target key array pool identifier carried in the key array pool access request sent by the application is FFFFFFFA; and it is assumed that a plurality of key array pool identifiers found out from the key array pool identifier mapping table in the internal memory according to the token identifier and corresponding grant states thereof are expressed as: FFFFFFFA is in the granted state, FFFFFFFB is in the ungranted state, and FFFFFFFC is in the ungranted state, the above-mentioned data is matched with the target key array pool identifier, and therefore, it can be known that the target grant state of the target key array pool identifier (i.e., FFFFFFFA) is the granted state. It should be noted that if the target grant state is the granted state, it is indicated that the application has the access authority to the target key array pool, and the application can access the target key array pool; and if the target grant state is the ungranted state, it is indicated that the application does not have the access authority to the target key array pool, and the application cannot access the target key array pool.

That is to say, in the present invention, when the application is intended to access the target key array pool, the target grant state of the application in the target key array pool can be determined based on the Pinpad service module and the grant authentication service module, and then, stricter and securer access control for the key array pool is achieved based on the grant state, so that the security of access of the application to the target key array pool is greatly improved, and finally, the secure access of the application to the key array pool is achieved.

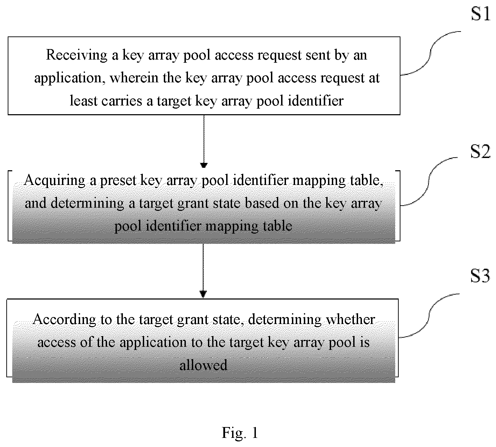

Accordingly, refer to Fig. 1 to Fig. 2, the present invention provides an access control method for a key array pool of a terminal, including the following steps:
S1: a key array pool access request sent by an application is received, wherein the key array pool access request at least carries a target key array pool identifier for accessing a target key array pool;
S2: a preset key array pool identifier mapping table is acquired, and a target grant state of the target key array pool identifier is determined based on the key array pool identifier mapping table; and
S3: according to the target grant state, it is determined whether access of the application to the target key array pool is allowed; wherein if the target grant state is a granted state, the access of the application to the target key array pool is allowed, and if the target grant state is an ungranted state, the access of the application to the target key array pool is rejected.

It can be known from the above-mentioned description that the present invention has the beneficial effects that the present invention provides an access control method for a key array pool of a terminal. When being intended to access a target key array pool, an application will send a key array pool access request carrying a target key array pool identifier, thereby achieving security management control for access of the application to the target key array pool based on the target key array pool identifier. Specifically, when the key array pool access request is received, a target grant state of the target key array pool identifier will be determined based on a preset key array pool identifier mapping table. Then, control for the access of the application to the target key array pool is achieved according to the target grant state, when the target grant state corresponding to the application is a granted state, the access of the application to the target key array pool is allowed, and when the target grant state is an ungranted state, the access of the application to the target key array pool is rejected.

In conclusion, in the present invention, stricter and securer grant management control for key array pool access is achieved based on the target key array pool identifier in the key array pool access request and the corresponding target grant state, so that secure access of the application to the target key array pool is achieved, and the data security of the key array pool is improved.

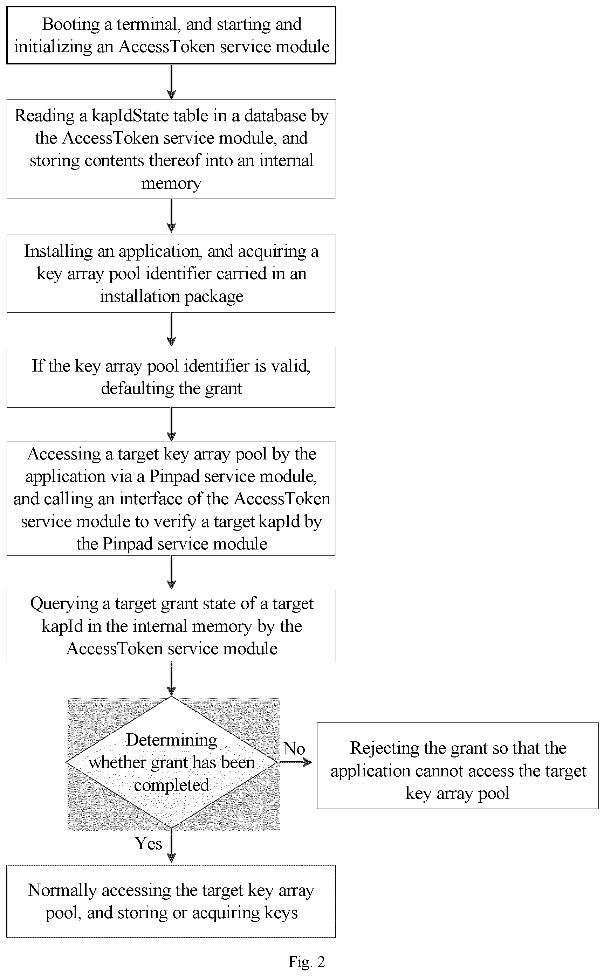

Each of steps S1-S3 and other optional steps will be described in detail below in conjunction with Fig. 2.

Step S1, a key array pool access request sent by an application is received, wherein the key array pool access request at least carries a target key array pool identifier for accessing a target key array pool.

It should be noted that the terminal in the present invention may be a commercial device product for an OpenHarmony standard system, such as a POS terminal for the OpenHarmony standard system.

The key array pool is an area for storing and managing keys (such as symmetric keys and asymmetric keys) required by the terminal, and any keys for upper-layer service access to an underlayer key array pool need to subject to grant control. It should be noted that a name of the key array pool can be set according to an actual situation, is not limited herein, and can be FFFFFFFB and FFFFFFFC, for example.

The key array pool identifier (i.e., kapId) is an identifier of the key array pool in the terminal, and each kapId corresponds to one key array pool. In the present invention, the key array pool identifier is also the name of the key array pool, such as FFFFFFFB and FFFFFFFC. It should be noted that an application signature entity of the application can carry one or more key array pool identifiers, and each key array pool identifier represents a key array pool. In an actual application, the key array pool identifier is only carried in the application signature entity of the application; only when a kapId authority is applied, the concept of grant appears, that is, the key array pool corresponding to the key array pool identifier can be accessed; and if the application does not carry the key array pool identifier, any key array pool cannot be accessed.

In the present invention, the target key array pool identifier is a key array pool identifier corresponding to the target key array pool intended to be accessed by the application in the terminal. In an actual application, if the application needs to access a target key array pool of which the name is FFFFFFFC, the application will send the key array pool access request carrying the target key array pool identifier (i.e., FFFFFFFC).

Step S2, a preset key array pool identifier mapping table is acquired, and a target grant state of the target key array pool identifier is determined based on the key array pool identifier mapping table.

The key array pool identifier mapping table includes a token identifier of the application, a key array pool identifier corresponding to the token identifier and a grant state of the key array pool identifier. In addition, the key array pool identifier mapping table may further include other data, such as a device identifier of the terminal, which is not limited herein. In an actual application, the token identifier, the key array pool identifier, the device identifier and the grant state can be stored in the key array pool identifier mapping table in an internal memory in a form of a data structure Map, that is, it is expressed as key array pool identifier maping (kapIdMap). Specifically, the token identifier is stored as a key, and the key array pool identifier, the device identifier and the grant state are stored as values.

The token identifier (i.e., tokenId) is a character string or serial number having uniqueness and generated by the application, and is an identity identifier of the application, and each application has a unique token identifier. In the present invention, the token identifier can be generated and assigned for the application by the grant authentication service module, in a process of installing each application, the AccessToken service module will generate a tokenId for the application, and meanwhile, the tokenId is recorded in an application installation record table in a database, wherein the application installation record table records a package name of the application, the tokenId, etc.

The device identifier (i.e., device_id) is a group of characters or digital codes for uniquely identifying a terminal.

In the present invention, the grant state refers to an authority state identification given for operations such as use, access and management for the keys in the key array pool, and determines an operation range and feasibility of the application to the keys. In the present invention, the grant state includes a granted state and an ungranted state, when the grant state is the granted state, it means that the application is allowed to normally access the corresponding key array pool so as to store or acquire key information; and when the grant state is the ungranted state, it means that the application does not acquire an authority for operating the keys in the key array pools, at the time, if the application tries to access the key array pool, the system will reject the request therefrom and may return wrong information to the application. In the present invention, the target grant state refers to a grant state of the target key array pool identifier.

In order to rapidly and effectively determine the target grant state of the target key array pool identifier, the present invention provides an optional embodiment. Specifically, in step S2, the step that a target grant state of the target key array pool identifier is determined based on the key array pool identifier mapping table includes: the token identifier of the application is acquired, and the target grant state corresponding to the target key array pool identifier is matched in the key array pool identifier mapping table based on the token identifier.

It should be noted that the key array pool access request can carry the package name of the application in addition to the corresponding target key array pool identifier. In an actual application, when transmitting the target key array pool identifier to the AccessToken service module, the Pinpad service module will also correspondingly send the package name of the application to the AccessToken service module. After receiving the target key array pool identifier, the AccessToken service module can query corresponding application information according to the package name of the application, and the application information includes the tokenId of the application. Then, the AccessToken service module can query the data in the key array pool identifier mapping table in the internal memory based on the tokenId, and then determine the corresponding target grant state.

In an actual application, it is assumed that application A is intended to access the target key array pool FFFFFFFB, firstly, the application A will send the key array pool access request carrying the target key array pool identifier and the package name of the application to the Pinpad service module, after receiving the key array pool access request, the Pinpad service module will call, by Binder communication, an interface for verifying the target key array pool identifier in the grant authentication service module, a transmitted parameter is the name (i.e., the target key array pool identifier) of the target key array pool required to be accessed by the application, and meanwhile, the Pinpad service module may also correspondingly send the package name of the application to the grant authentication service module. Then, if the grant authentication service module receives the target key array pool identifier, the grant authentication service module will query the token identifier of the application based on the package name of the application, and then query the data in the key array pool identifier mapping table in the internal memory according to the token identifier so as to acquire the target grant state of the target key array pool identifier corresponding to the token identifier.

It can be known from the above-mentioned description that each application has a unique token identifier, and therefore, in the present invention, the target grant state corresponding to the target key array pool identifier can be rapidly determined in the key array pool identifier mapping table according to the token identifier.

Step S3, according to the target grant state, it is determined whether access of the application to the target key array pool is allowed; wherein if the target grant state is a granted state, the access of the application to the target key array pool is allowed, and if the target grant state is an ungranted state, the access of the application to the target key array pool is rejected.

In an actual application, when the target grant state is the granted state, it means that the application is allowed to normally access the target key array pool within a specified authority range so as to store or acquire key information; and when the target grant state is the ungranted state, it means that the application does not acquire an authority of operating the target key array pool, at the time, if the application tries to access the target key array pool, the system will reject the request thereof and may return wrong information to the application.

As mentioned above, when the application correspondingly accesses the target key array pool every time, the grant authentication service module will read the target grant state corresponding to the target key array pool identifier sent by the application, if the key array pool identifier mapping table is put into a database, when the target grant state is read every time, the database needs to be operated frequently, which results in a low reading efficiency. Therefore, the present invention provides the following optional embodiment to increase the reading efficiency, which is specifically described as follows:
in the optional embodiment, the access control method further includes: a data initialization operation is performed in the case that the terminal performs a booting operation.

The data initialization operation includes: it is determined whether a key array pool identifier state table exists in a database of the terminal, if the key array pool identifier state table does not exist in the database of the terminal, the key array pool identifier state table is created in the database, and if the key array pool identifier state table exists in the database of the terminal, data in the key array pool identifier state table is read, and the data in the key array pool identifier state table is stored into the key array pool identifier mapping table in an internal memory of the terminal.

The key array pool identifier state table includes data such as the token identifier of the application, the key array pool identifier, the device identifier of the terminal and the grant state of the key array pool identifier. **In** an actual application, the token identifier, the key array pool identifier, the device identifier and the grant state can be stored in the key array pool identifier state table in a form of a corresponding data structure, for example, the token identifier, the key array pool identifier, the device identifier and the grant state can be stored in the key array pool identifier mapping table in the internal memory in the form of the data structure Map. Specifically, the token identifier can be stored as a key, and the key array pool identifier, the device identifier and the grant state can be stored as values.

It can be known from the above-mentioned description that in the present invention, in a process that the terminal is booted or restarted every time, the grant authentication service module will perform a self-booting operation and perform a corresponding data initialization operation, thereby rereading the corresponding data from the key array pool identifier state table in a database, and then storing the data into the key array pool identifier mapping table of the internal memory. In this way, when being read every time, the target grant state can be directly read from the key array pool identifier mapping table in the internal memory, and the reading-writing speed of the internal memory is high, so that the database is prevented from being operated frequently, and the reading efficiency is increased. In addition, it should be further noted that it will be further determined, in the process that the terminal is booted or restarted in the present invention, whether the key array pool identifier state table exists in the database of the terminal, if the key array pool identifier state table does not exist in the database of the terminal, the key array pool identifier state table is created in the database, so that the updated key array pool identifier and other data can be stored in the key array pool identifier state table in the database in a subsequent process that the application is updated and other processes, which has the advantages that: on one hand, the timeliness and effectiveness of the data such as the key array pool identifier can be guaranteed, and on the other hand, the data such as the key array pool identifier is stored in the database for a long time, so that the data is queried and used when being required, and it is ensured that data loss caused by sudden failure or restarting of a device can be avoided.

In an actual application, when the terminal downloads a certain application for the first time, data such as the token identifier of the application, the key array pool identifier and the grant state do not exist in the key array pool identifier state table in the database and the target key array pool identifier mapping table in the internal memory. In addition, when the application of the terminal is actually used, the corresponding data such as the key array pool identifier and the grant state may be changed, if the above-mentioned data is not updated, there may be a problem in access control for the key array pool, for example, the application has an authority of accessing the key array pool FFFFFFFB before update, and may not have the authority of accessing the key array pool FFFFFFFB after the update. Therefore, if the above-mentioned data is not updated, the application not allowed to access the key array pool FFFFFFFB accesses the key array pool FFFFFFFB, which easily results in data leakage, thereby resulting in a security risk. In order to solve the above-mentioned problem, the present invention provides the following optimal embodiment, which is specifically described as follows:
In the optional embodiment, the access control method further includes: in a process of installing the application, an updating operation is performed on the key array pool identifier mapping table and the key array pool identifier state table.

The step that an updating operation is performed on the key array pool identifier mapping table and the key array pool identifier state table includes:
an installation package of the application is acquired and parsed to obtain a key array pool identifier in the installation package; wherein the key array pool identifier is pre-signed in a customized signature entity;
it is determined whether the key array pool identifier is valid, if the key array pool identifier is valid, a grant state of the key array pool identifier is set as a granted state, and if the key array pool identifier is invalid, the grant state of the key array pool identifier is set as an ungranted state; and
the key array pool identifier and the grant state are associated with the token identifier, and the key array pool identifier and the grant state are correspondingly stored into the key array pool identifier mapping table and the key array pool identifier state table (i.e., a kapIdState table), respectively.

The process of installing the application includes an initial download and installation process of the application and an update and installation process of the application. It should be particularly noted that a name of a key array pool needing to be accessed is signed in the customized signature entity of the installation package of the application in the present invention, and the name, such as FFFFFFFB, of the signed key array pool is legal, for example, if the application A needs to access the key array pool of which the access name is FFFFFFFB in a use process, a signature tool is needed to sign FFFFFFFB into the installation package.

In addition, in an actual application, management control for the application and the name of the key array pool can be performed by a package manager, such as a package manager service (PMS) or bundle manager service (BMS),in the terminal, and finally, secure access of the application to the key array pool is achieved. For example, the package manager is configured to parse an installation package in a process of installing the application so as to acquire a key array pool identifier with the installation package carried in a customized signature entity. Specifically, in the process of installing the application, the package manager will parse the installation package of the application, and the key array pool identifier is signed in the customized signature entity of the installation package, and therefore, the package manager can parse the key array pool identifier from the installation package.

After the key array pool identifier is acquired, it is necessary to determine whether the key array pool identifier is valid, so that the grant state corresponding to each key array pool identifier of the application is determined, that is, the access authority of the application to each key array pool is determined. Specifically speaking, if the key array pool identifier is valid, a grant state of the key array pool identifier is set as a granted state, for example, a value of the grant state (i.e., grant state) corresponding to the key array pool identifier can be set as 1, and if the key array pool identifier is invalid, the grant state of the key array pool identifier is set as an ungranted state, for example, a value of the grant state corresponding to the key array pool identifier can be set as 0. Then, the above-mentioned grant state, the key array pool identifier and the token identifier assigned to the application by the grant authentication service module are associated and are stored into the key array pool identifier mapping table, and meanwhile, the token identifier and the data such as the key array pool identifier and the grant state are correspondingly and associatively stored into the key array pool identifier state table in the database.

**It** can be known from the above-mentioned description that when the terminal downloads a certain application for the first time, data such as the token identifier of the application, the key array pool identifier and the grant state is stored into the key array pool identifier state table in the database and the target key array pool identifier mapping table in the internal memory, which facilitates subsequent management control for access of the application to the key array pool according to the data in the above-mentioned key array pool identifier mapping table. In addition, when the application of the terminal is actually used, the corresponding data such as the key array pool identifier and the grant state may be changed, when the application is updated, the data such as the key array pool identifier of the application and the grant state are refilled into the key array pool identifier mapping table and the key array pool identifier state table so as to be updated, so that the accuracy and effectiveness of access control for the key array pool are guaranteed.

In conclusion, in the process of installing the application, the key array pool identifier mapping table in the internal memory and the key array pool identifier state table in the database are updated, so that the accuracy and effectiveness of access control for the target key array pool are guaranteed, and the security of the target key array pool is improved.

As mentioned above, when the state of the key array pool identifier of the application is set, it is necessary to determine whether the key array pool identifier is valid, and therefore, the present invention accordingly provides a method for determining whether the key array pool identifier is valid, which is specifically described as follows:
in the access control method provided by the present invention, the step that it is determined whether the key array pool identifier is valid includes: it is determined whether the key array pool identifier satisfies preset conditions, if the key array pool identifier satisfies the preset conditions, it is determined that the key array pool identifier is valid, and if the key array pool identifier does not satisfy the preset conditions, it is determined that the key array pool identifier is invalid; wherein the preset conditions are that: the key array pool identifier cannot be empty and has to include eight characters, and each character is a-f or A-F or 0-9.

It can be known from the above-mentioned description that the effectiveness of the key array pool identifier can be determined rapidly and accurately according to the above-mentioned preset conditions, so that the state of the key array pool identifier is set rapidly and effectively.

In conclusion, according to the access control method and system for a key array pool of a terminal provided in the present invention, an access control solution for the key array pool of the terminal is designed in the present invention, if the application is intended to access the key array pool, the application has to sign the name of the key array pool in the customized signature entity and ensure that the name of the key array pool is legal so as to achieve the secure access of the application to the key array pool. In the present invention, stricter and securer grant management control for key array pool access is achieved based on the target key array pool identifier in the key array pool access request and the corresponding target grant state, so that secure access of the application to the target key array pool is achieved, and the data security of the key array pool is improved.

Above descriptions are only embodiments of the present invention, and are not intended to hence limit the patent scope of the present invention. Any equivalent transformations made according to the contents of the description and the accompanying drawings of the present invention are directly or indirectly applied to the related art and also fall within the patent protection scope of the present invention in a similar way.

## Claims

1. An access control method for a key array pool of a terminal, **characterized by** comprising the following steps:
S1: receiving a key array pool access request sent by an application, wherein the key array pool access request at least carries a target key array pool identifier for accessing a target key array pool;
S2: acquiring a preset key array pool identifier mapping table, and determining a target grant state of the target key array pool identifier based on the key array pool identifier mapping table; and
S3: according to the target grant state, determining whether access of the application to the target key array pool is allowed; wherein if the target grant state is a granted state, the access of the application to the target key array pool is allowed, and if the target grant state is an ungranted state, the access of the application to the target key array pool is rejected.

2. The access control method according to claim 1, **characterized in that** in step S2, the key array pool identifier mapping table comprises a token identifier of the application, a key array pool identifier corresponding to the token identifier and a grant state of the key array pool identifier.

3. The access control method according to claim 2, **characterized in that** in step S2, the determining a target grant state of the target key array pool identifier based on the key array pool identifier mapping table comprises:
acquiring the token identifier of the application, and matching the target grant state corresponding to the target key array pool identifier in the key array pool identifier mapping table based on the token identifier.

4. The access control method according to claim 2, **characterized in that** the method further comprises:
performing a data initialization operation in the case that the terminal performs a booting operation.

5. The access control method according to claim 4, **characterized in that** the data initialization operation comprises:
determining whether a key array pool identifier state table exists in a database of the terminal, if the key array pool identifier state table does not exist in the database of the terminal, creating the key array pool identifier state table in the database, and if the key array pool identifier state table exists in the database of the terminal, reading data in the key array pool identifier state table, and storing the data in the key array pool identifier state table into the key array pool identifier mapping table in an internal memory of the terminal.

6. The access control method according to claim 5, **characterized in that** the method further comprises: in a process of installing the application, performing an updating operation on the key array pool identifier mapping table and the key array pool identifier state table.

7. The access control method according to claim 6, **characterized in that** the performing an updating operation on the key array pool identifier mapping table and the key array pool identifier state table comprises:
acquiring and parsing an installation package of the application to obtain a key array pool identifier in the installation package; wherein the key array pool identifier is pre-signed in a customized signature entity;
determining whether the key array pool identifier is valid, if the key array pool identifier is valid, setting a grant state of the key array pool identifier as a granted state, and if the key array pool identifier is invalid, setting the grant state of the key array pool identifier as an ungranted state; and
associating the key array pool identifier and the grant state with the token identifier, and correspondingly storing the key array pool identifier and the grant state into the key array pool identifier mapping table and the key array pool identifier state table, respectively.

8. The access control method according to claim 7, **characterized in that** the determining whether the key array pool identifier is valid comprises:
determining whether the key array pool identifier satisfies preset conditions, if the key array pool identifier satisfies the preset conditions, determining that the key array pool identifier is valid, and if the key array pool identifier does not satisfy the preset conditions, determining that the key array pool identifier is invalid;
wherein the preset conditions are that: the key array pool identifier comprises eight characters, and each character is a-f or A-F or 0-9.

9. An access control system for a key array pool of a terminal, **characterized in that** the terminal comprises an application, a personal identification number pad, Pinpad, service module, a grant authentication service module and a target key array pool, and the Pinpad service module is in communication connection with the application and the grant authentication service module, respectively, wherein:
the application is configured to initiate a key array pool access request, and send the key array pool access request to the Pinpad service module;
the Pinpad service module is configured to receive the key array pool access request, and call, by Binder communication, an interface for verifying the target key array pool identifier in the grant authentication service module so as to transmit the target key array pool identifier into the grant authentication service module; and
the grant authentication service module is configured to perform grant state verification on the target key array pool identifier after receiving the target key array pool identifier transmitted by the Pinpad service module so as to determine, according to a verified target grant state, whether the application has an access authority to the target key array pool.

10. The access control system according to claim 9, **characterized by** further comprising a package manager, wherein the package manager is configured to parse an installation package in a process of installing the application so as to acquire a key array pool identifier with the installation package carried in a customized signature entity.
